# EUROPÄISCHE PATENTSCHRIFT

(11) **EP 0 892 833 B1**
(45) Veröffentlichungstag und Bekanntmachung des Hinweises auf die Patenterteilung: **26.09.2001**
(21) Anmeldenummer: 97914515.8
(22) Anmeldetag: 10.04.1997
(51) Int. Cl.: C09D 7/12, C08K 5/3435

(54) **STABILISIERUNG VON LACKEN**
PAINT STABILISER
STABILISATION DE PEINTURES

(30) Priorität: 12.04.1996 DE 19614520
(43) Veröffentlichungstag der Anmeldung: 27.01.1999
(73) Patentinhaber: Clariant Finance (BVI) Limited, Road Town, Tortola (VG)
(72) Erfinder: BECHTOLD, Karl, D-79418 Schliengen (DE); LIGNER, Gilbert, F-68920 Wintzenheim (FR)
(74) Vertreter: D'haemer, Jan Constant
(86) Internationale Anmeldenummer: IB9700387
(87) Internationale Veröffentlichungsnummer: WO9739069

(56) Entgegenhaltungen:
- EP-A- 0 240 723
- EP-A- 0 453 396
- DE-A- 3 412 227
- GB-A- 2 269 819

## Beschreibung

Die vorliegende Erfindung betrifft die Verwendung einer photoreaktiven, UV-Licht absorbierenden Piperidinverbindung bzw. einer Mischung bestehend aus dieser Piperidinverbindung und mindestens einem UV-Absorber als Lichtschutzmittel in Lacken, vorzugsweise Autolacken.

Gegenstand der Erfindung ist auch ein Verfahren zum Stabilisieren von Lacken gegen den Abbau des im Lack enthaltenen Polymermaterials, hervorgerufen durch die Einwirkung von Luftsauerstoff, Wärme und/oder UV-Licht sowie die so stabilisierten Lacke selbst.

Die Einflüsse von Luftsauerstoff, Feuchtigkeit und vor allem UV-Licht führen in Lacken zu einem Abbau des im Lack enthaltenen Polymermaterials. Dies äußert sich z.B. in Rissbildungen, Glanzverlust, Farbtonänderungen, Delaminierung und Blasenbildung. Es ist bekannt, solche Vorgänge in Lacke durch den Einsatz geeigneter Stabilisatoren zu verzögern. Bekannte Lackzusammensetzungen enthalten daher oftmals eine Mischung aus einem UV-Absorber und einem sterisch gehinderten Amin (HALS: hindered amine light stabilizer). Es ist bekannt, daß diese Verbindungen vom HALS-Typ als Radikalfänger reagieren und daher generell für die Stabilisierung von polymeren Substraten eingesetzt werden.

Aus der DE-A-3 412 227 sind Piperidinverbindungen bekannt, die sich besonders zur Stabilisierung von Autolacken eignen. Aus der GB-A-2 269 819 sind Piperidinverbindungen bekannt, die sich zur Stabilisierung von Polyolefinen, besonders von Polypropylen, eignen

Es wurde nunmehr gefunden, daß ein spezifisches, sterisch gehindertes Amin der untenstehenden Formel (A), das photoreaktiv ist und UV-Licht absorbiert, allein oder in Kombination mit UV-Absorbem oder Mischungen verschiedener UV-Absorbern, sich als Lichtschutzmittel für Lacke, insbesondere Automobillacke, besonders gut geeignet.

Gegenstand der Erfindung ist somit die Verwendung einer Mischung bestehend aus einer Piperidinverbindung der folgenden Formel (A) (nachfolgend HALS A genannt) 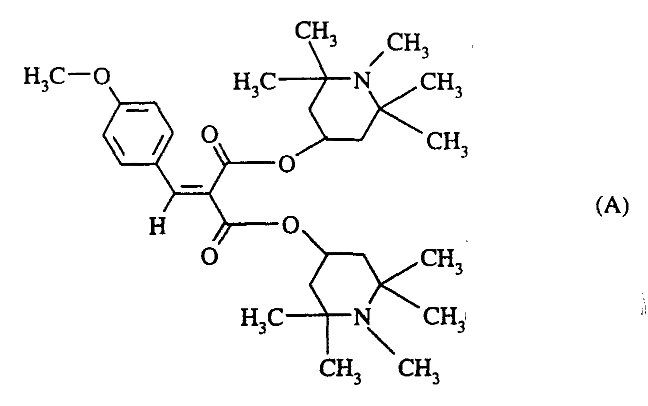 und mindestens einem UV-Absorber, ausgewählt aus der Gruppe, die aus 2-Hydroxyphenylbenztriazolen (1), 2-Hydroxyphenyltriazinen (2), 2-Hydroxybenzophenonen (3), Oxalaniliden (4) und Zimtsäurederivaten (5) besteht, als Lichtschutzmittel in Lacken.

Geeignete 2-Hydroxyphenylbenztriazole entsprechen den Formeln (1a) oder (1b). 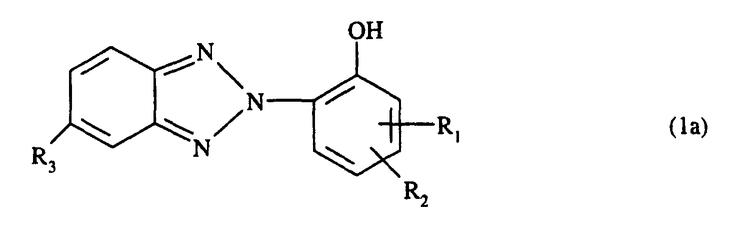 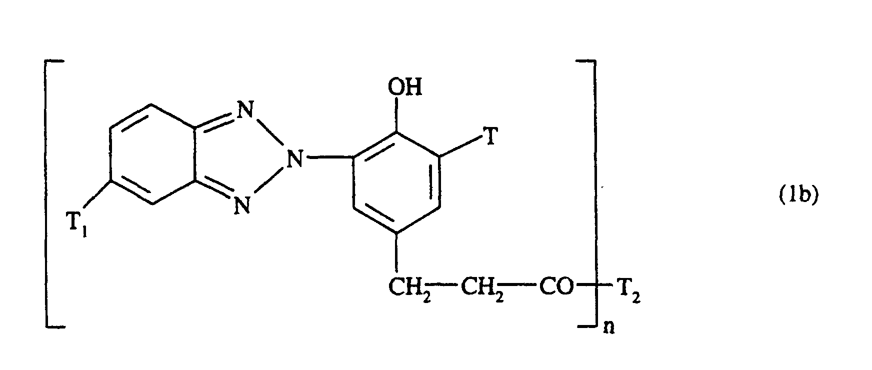 worin in den Verbindungen der Formel (1a)
- R₁: Wasserstoff, Alkyl mit 1 bis 24 Kohlenstoffatomen, vorzugsweise Alkyl mit 1 bis 20 Kohlenstoffatomen bedeuten, wie Methyl, Ethyl, Propyl, Butyl, Hexyl, Octyl, Nonyl, Dodecyl, Tetradecyl, Hexadecyl, Octadecyl, Nonadecyl und Eicosyl, sowie entsprechende verzweigte Isomere, oder Phenylalkyl mit 1 bis 4 Kohlenstoffatomen im Alkylteil, insbesondere Benzyl.
- R₂: Wasserstoff, Halogen, insbesondere Chlor und Brom, Alkyl mit 1 bis 18 Kohlenstoffatomen oder Phenylalkyl mit 1 bis 4 Kohlenstoffatomen im Alkylteil, insbesondere Benzyl, α-Methylbenzyl, Cumyl.
- R₃: Wasserstoff, Chlor oder Alkyl mit 1 bis 4 Kohlenstoffatomen, insbesondere Methyl, Butyl bedeutet,
wobei mindestens einer der Reste R₁ und R₂ von Wasserstoff verschieden ist,
worin in den Verbindungen der Formel (1b)
- T: Wasserstoff oder Alkyl mit 1 bis 6 Kohlenstoffatomen, insbesondere Methyl und Butyl
- T₁: Wasserstoff, Chlor oder Alkyl mit 1 bis 4 Kohlenstoffatomen, insbesondere Methyl
- n: 1 oder 2, und
- T₂: wenn n 1 ist, Chlor oder ein Rest der Formel -OT₃, und wenn n 2 ist, ein Rest der Formel-O-T₉-O- ist, worin
- T₃: Wasserstoff, gegebenenfalls durch 1 bis 3 Hydroxylgruppen substituiertes Alkyl mit 1 bis 18 Kohlenstoffatomen, durch -O- ein- oder mehrfach unterbrochenes Alkyl mit 3 bis 18 Kohlenstoffatomen, das gegebenenfalls durch Hydroxyl substituiert ist, gegebenenfalls durch Hydroxyl substituiertes Alkenyl mit 2 bis 18 Kohlenstoffatomen (geeignete Alkenylenreste leiten sich von den in den Definitionen von R₁ aufgezählten Alkylresten ab), Phenylalkyl mit 1 bis 4 Kohlenstoffatomen im Alkylteil, insbesondere Benzyl, Phenylethyl, Cumyl, α-Methylbenzyl, oder ein Rest der Formel -CH₂CH(OH)-T₇ ist,
- T₇: Wasserstoff, Alkyl mit 1 bis 18 Kohlenstoffatomen oder Phenyl ist,
- T₉: Alkylen mit 2 bis 8 Kohlenstoffatomen, Alkenylen mit 4 bis 8 Kohlenstoffatomen, Cyclohexylen oder durch -O- ein- oder mehrfach unterbrochenes Alkylen mit 2 bis 18 Kohlenstoffatomen, bedeutet, wobei die Alkylen- oder Alkenylenreste auch verzweigt sein können.

Geeignete 2-Hydroxyphenyltriazine entsprechen der Formel (2) 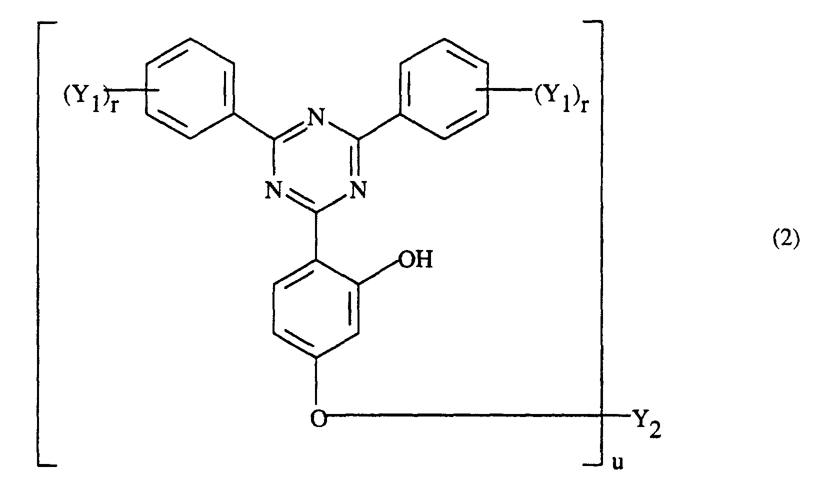 worin
- u: 1 oder 2 ist,
- r: eine ganze Zahl von 1 bis 3 bedeutet,
- Y₁: unabhängig voneinander Wasserstoff, Hydroxyl, Halogenmethyl, Alkyl mit 1 bis 12 Kohlenstoffatomen, Alkoxy mit 1 bis 18 Kohlenstoffatomen oder Halogen bedeuten.
- Y₂: wenn u 1 ist, Alkyl mit 1 bis 18 Kohlenstoffatomen, durch Hydroxyl, Alkoxy mit 1 bis 18 Kohlenstoffatomen, Halogen, durch -COOH, -COOY₈, -CONH₂, -CONHY₉, -CONY₉Y₁₀, -CN und/oder -OCOY₁₁ substituiertes Alkyl mit 1 bis 12 Kohlenstoffatomen, durch ein oder mehrere Sauerstoffatome unterbrochenes und gegebenenfalls durch Hydroxyl oder Alkoxy mit 1 bis 12 Kohlenstoffatomen substituiertes Alkyl mit 4 bis 20 Kohlenstoffatomen, Alkenyl mit 3 bis 6 Kohlenstoffatomen, Glycidyl, unsubstituiertes oder durch Hydroxyl, Chlor und/oder Methyl substituiertes Phenylalkyl mit 1 bis 5 Kohlenstoffatomen im Alkylteil, -COY₁₂ oder -SO₂Y₁₃ bedeutet oder
- Y₂: wenn u 2 ist, Alkylen mit 2 bis 16 Kohlenstoffatomen, Alkenylen mit 4 bis 12 Kohlenstoffatomen, Xylylen, durch ein oder mehrere -O- unterbrochenes und/oder durch Hydroxyl substituiertes Alkylen mit 3 bis 20 Kohlenstoffatomen, -CH₂CH-(OH)CH₂-O-Y₁₅-OCH₂CH(OH)CH₂, oder -(CH₂)ₘ-CO₂-Y₁₈-OCO-(CH₂)ₘ ist, worin m 1, 2 oder 3 ist,
- Y₈: Alkyl mit 1 bis 18 Kohlenstoffatomen, Alkenyl mit 3 bis 18 Kohlenstoffatomen, durch ein oder mehrere Sauerstoffatome unterbrochenes und/oder durch Hydroxyl substituiertes Alkyl mit 3 bis 20 Kohlenstoffatomen, Glycidyl oder Phenylalkyl mit 1 bis 5 Kohlenstoffatomen im Alkylteil bedeutet,
- Y₉ und Y₁₀: unabhängig voneinander Alkyl mit 1 bis 12 Kohlenstoffatomen, Alkoxyalkyl mit 3 bis 12 Kohlenstoffatomen, Dialkylaminoalkyl mit 4 bis 16 Kohlenstoffatomen oder Cycloalkyl mit 5 bis 12 Kohlenstoffatomen bedeuten,
- Y₁₁: Alkyl mit 1 bis 18 Kohlenstoffatomen, Alkenyl mit 2 bis 18 Kohlenstoffatomen oder Phenyl,
- Y₁₂: Alkyl mit 1 bis 18 Kohlenstoffatomen, Alkenyl mit 2 bis 18 Kohlenstoffatomen Phenyl, Alkoxy mit 1 bis 12 Kohlenstoffatomen, Phenoxy, Alkylamino mit 1 bis 12 Kohlenstoffatomen, oder Phenylamino,
- Y₁₃: Alkyl mit 1 bis 18 Kohlenstoffatomen, Phenyl, Alkylphenyl mit 1 bis 8 Kohlenstoffatomen im Alkylrest,
- Y₁₅: Alkylen mit 2 bis 20 Kohlenstoffatomen, Phenylen oder eine Gruppe -Phenylen-M-Phenylen, worin M -O-, -S-, -SO₂-, -CH₂- oder -C(CH₃)₂- ist und
- Y₁₈: Alkylen mit 2 bis 10 Kohlenstoffatomen oder durch Sauerstoff ein- oder mehrfach unterbrochenes Alkylen mit 4 bis 20 Kohlenstoffatomen ist.

Geeignete 2-Hydroxybenzophenone entsprechen der Formel (3) 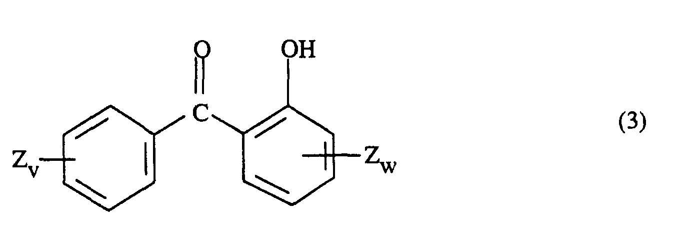 worin
- v: eine ganze Zahl von 1 bis 3,
- w: 1 oder 2, und
- Z: unabhängig voneinander Wasserstoff, Halogen, Hydroxyl oder Alkoxy mit 1 bis 12 Kohlenstoffatomen ist.

Geeignete Oxalanilide entsprechen der Formel (4) 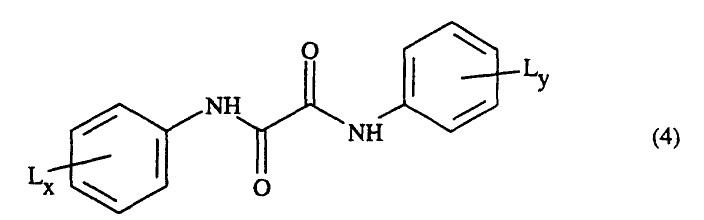 worin
- x: ein ganze Zahl von 1 bis 3,
- y: 1 oder 2, und
- L: unabhängig voneinander H, Alkyl mit 1 bis 20 Kohlenstoffatomen, Hydroxyl oder Alkoxy mit 1 bis 20 Kohlenstoffatomen ist. Die Substituenten L befinden sich dabei bevorzugt in ortho- und/oder para-Position.

Beispiele für Alkyl-, Alkoxy-, Phenylalkyl, Alkylen-, Alkenylen-, Alkoxyalkyl- und Cycloalkylreste sowie Alkylthio-, Oxaalkylen- oder Azoalkylenreste in den Verbindungen der Formeln (2), (3), (4) und (5) können den obigen Ausführungen entnommen werden.

Geeignete Zimtsäurederivate entsprechen der Formel (5) 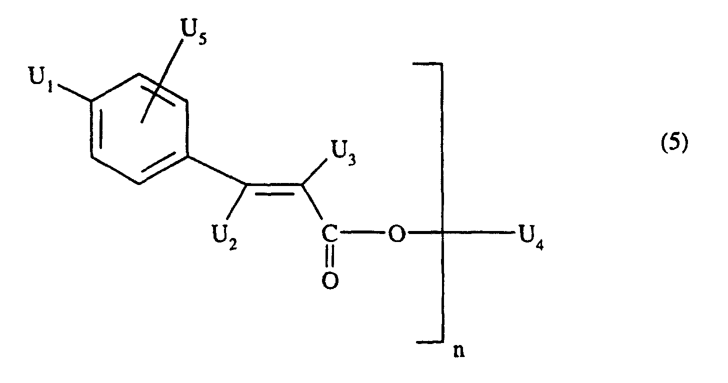 wobei
- n: eine ganze Zahl von 1 - 4
- U₁: H, Alkyl, Hydroxy, Alkoxy, NH₂, NHAlkyl, N-Dialkyl
- U₂: H, Alkyl, Aryl, mit Alkyl substituiertes Aryl, Alkoxyaryl, p-Hydroxyaryl, p-Aminoaryl
- U₃: H, CN, COOU₆
- U₄: wenn n 1 ist, gegebenenfalls durch -O- ein- oder mehrfach unterbrochenes Alkyl (n, iso, cyclo) mit 1 bis 20 Kohlenstoffatomen,
wenn n 2 ist, gegebenenfalls durch -O- ein- oder mehrfach unterbrochenes Alkylen (n, iso, cyclo) mit 1 bis 20 Kohlenstoffatomen,
wenn n 3 ist, Rest eines Triols, wie Trimethylolpropan, Propantriol
wenn n 4 ist, Rest eines Tetraols, wie Pentaerythrit
- U₅: Wasserstoff oder ein Substituent wie U₁, bevorzugt Alkoxy
- U₆: Alkyl (n, iso, cyclo) mit 1 bis 20 Kohlenstoffatomen,
bedeuten.

Die UV-Absorber der Formeln (1a), (1b), (2), (3), (4) und (5) sind an sich bekannt und beispielsweise mit ihrer Herstellung in EP-A-0 323 408, EP-A-0 057 160, EP-A-0 434 608, US-A-4 619 956, DE-A-3 135 810, GB-A-1 336 391 und EP-A-0 322 557 beschrieben.

UV-Absorber, die den untenstehenden Formeln UVA-1 bis UVA-11 entsprechen, sind besonders bevorzugt.

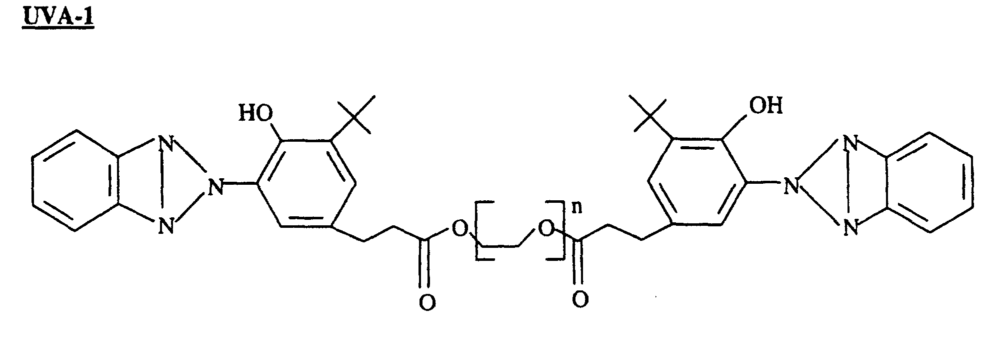

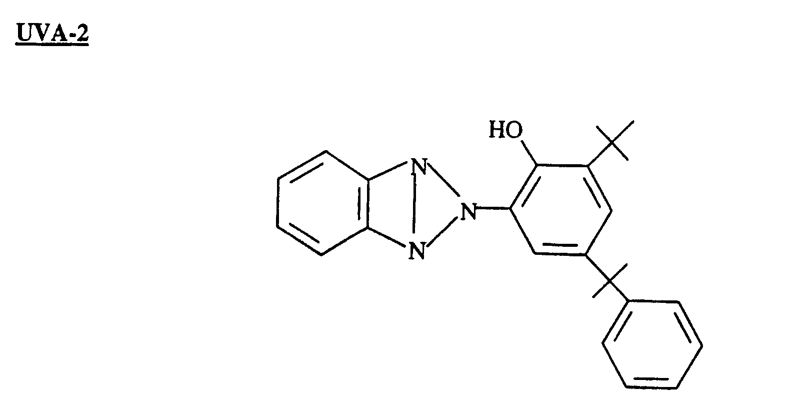

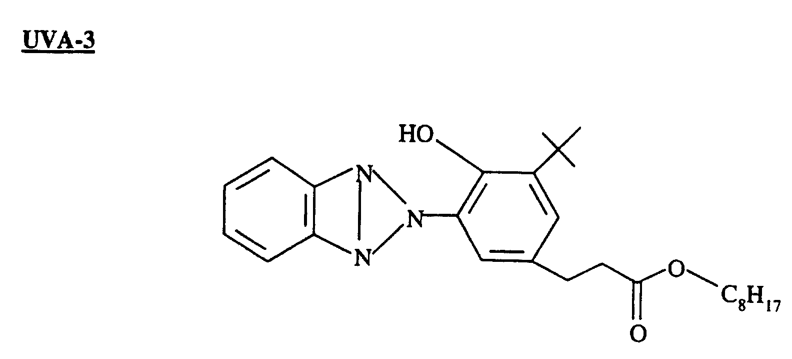

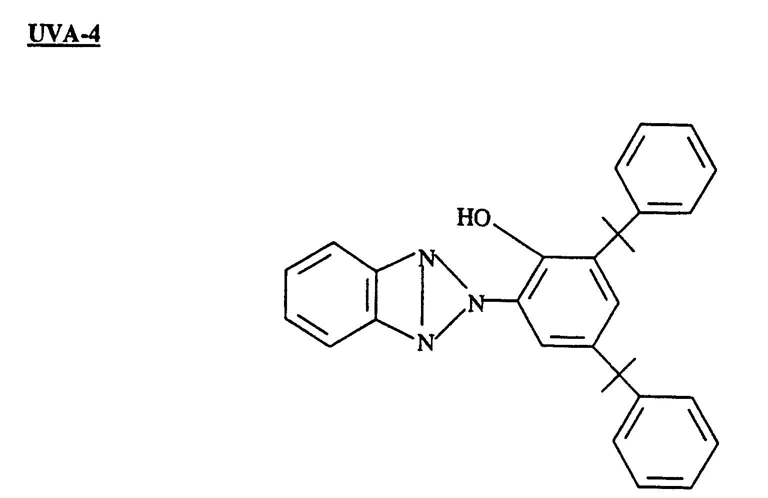

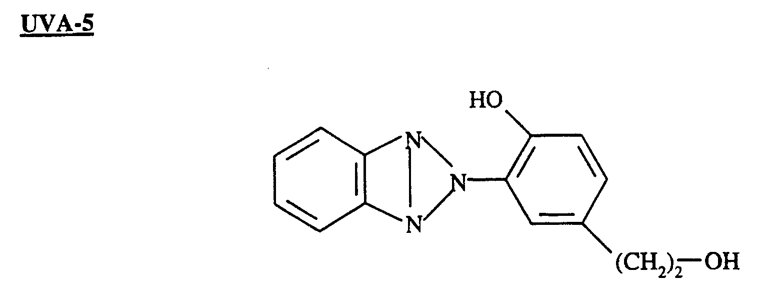

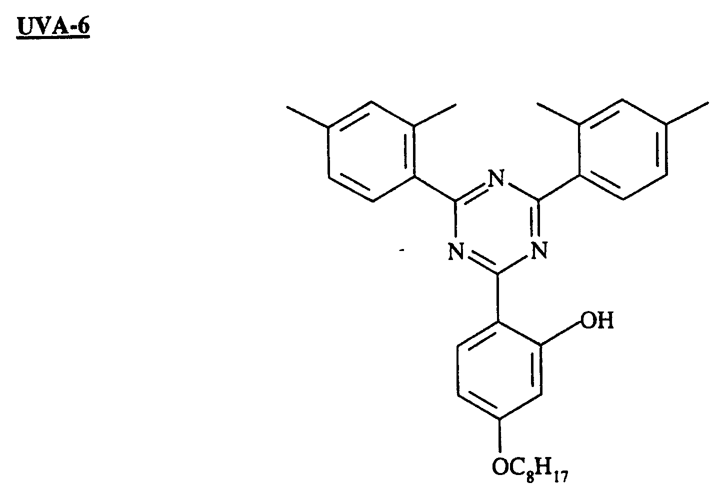

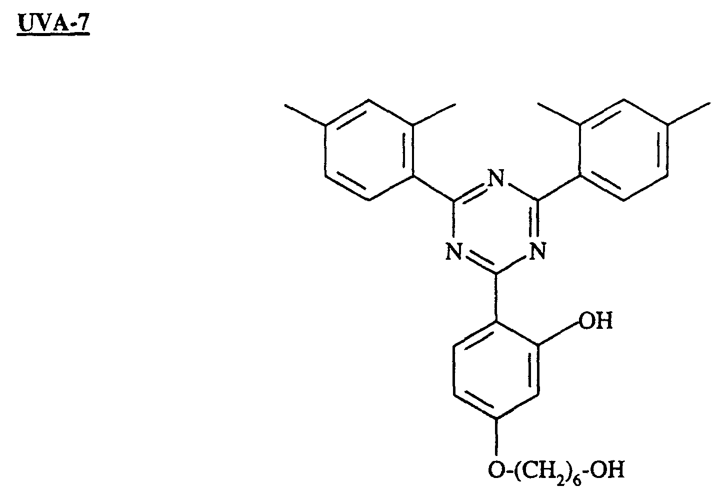

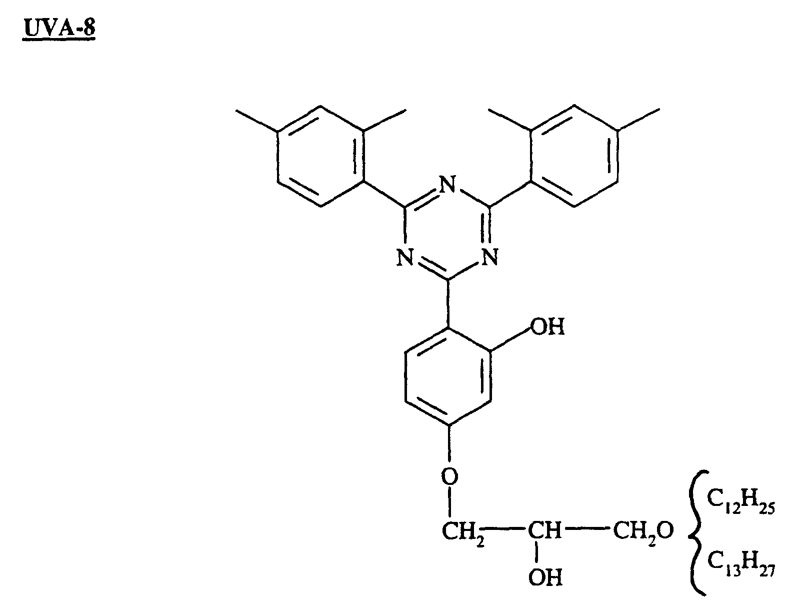

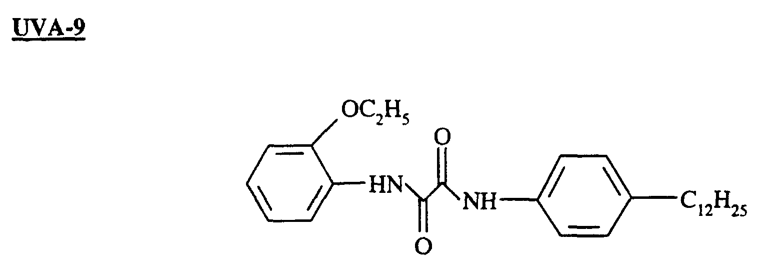

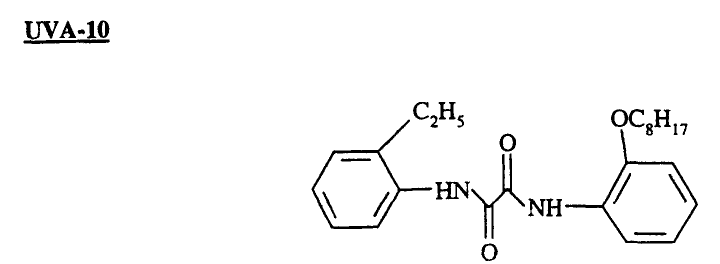

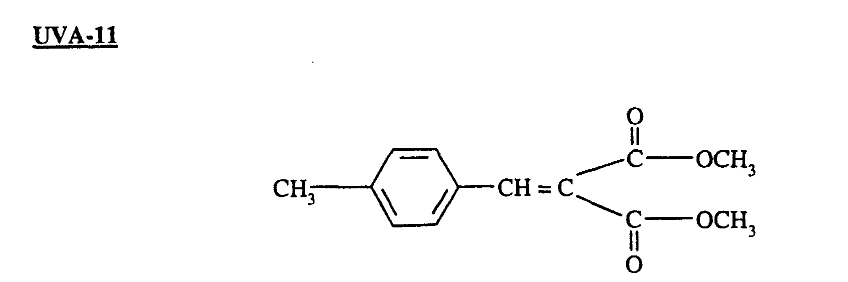

Die vorliegende Erfindung betrifft auch ein Verfahren zum Stabilisieren von Lacken gegen den Abbau des im Lack enthaltenen Polymermaterials hervorgerufen durch die Einwirkung von Wärme und Licht, dadurch gekennzeichnet, daß man den zu stabilisierenden Lacken eine Mischung bestehend aus der Piperidinverbindung der Formel A und mindestens einem UV-Absorber ausgewählt aus der Gruppe, die aus 2-Hydroxyphenylbenztriazolen, 2-Hydroxyphenyltriazinen, 2-Hydroxybenzophenonen, Oxalaniliden und Zimtsäurederivate in einer zur Stabilisierung ausreichenden Menge in fester oder gelöster Form zusetzt und nach üblichen, an sich bekannten Methoden in die Lacke bzw. Lackzusammensetzungen einarbeitet. Die zu wählende Gesamtmenge an Lichtschutzmittel sowie das Mischungsverhältnis von HALS A zu UV-Absorber hängt von der Natur der Lackzusammensetzung und von den Anforderungen an ihre Stabilität ab. Die Gesamtmenge an Lichtschutzmittel beträgt zwischen 0.2 bis 5 Gew.-%, vorzugsweise 0.5 bis 1.5 Gew.-%, bezogen auf den Trockengehalt des Lacks. Das Mischungsverhältnis von HALS A zu UV-Absorber hängt von der Natur des Lackes, der geforderten Stabilität und der Natur des eingesetzten UV-Absorbers ab. Es variiert daher zwischen 10:1 bis 1:10. Typische Mischungsverhältnisse liegen zwischen 4:1 bis 1:4, vorzugsweise 3:1 bis 1:3. In Polyurethanlacken beispielsweise ist eine erfindungsgemässe Mischung bestehend aus 2 Teilen der Piperidinverbindung der Formel A und 1 Teil UV-Absorber zu empfehlen, während für Lacke auf Basis von härtbaren Acrylharzen beispielsweise ein Mischungsverhältnis von HALS A zu UV-Absorber von 1 zu 3 zur Erzielung erfindungsgemässer Resultate anzuwenden ist. Die einzelnen Komponenten der synergistischen Mischung können einzeln oder als Gemisch den entsprechenden Lackzusammensetzungen zugefügt werden. Bei den Zweischichtlacken kann die Zugabe zur Unterschicht und/oder Oberschicht erfolgen. Bevorzugt enthält die Oberschicht das erfindungsgemässe Lichtschutzmittel. Den Lackzusammensetzungen können auch die üblichen weiteren Zusätze hinzugefügt werden, ohne daß die Schutzwirkung des erfindungsgemäss eingesetzten Lichtschutzmittels dadurch beeinträchtigt wird.

Vorzugsweise verwendet man das erfindungsgemässe Lichtschutzmittel in Pulverform, flüssiger Form oder in flüssigen Zubereitungen, welche volumetrisch schnell und genau dosiert in flüssige Lacksysteme eingebracht werden können.

Die erfindungsgemässen Lackzusammensetzungen können jede beliebige Art von Lacken umfassen, z.B. pigmentierte oder unpigmentierte Lacke oder Metalleffektlacke sein. Sie können ein organisches Lösungsmittel enthalten oder lösungsmittelfrei sein oder wäßrige Lacke sein. Beispiele für Lacke mit speziellen Bindemitteln sind die folgenden:
1. Lacke auf Basis von kalt- oder heissvernetzbaren Alkyd-, Acrylat-, Polyester-, Epoxid- oder Melaminharzen oder Mischungen solcher Harze, gegebenenfalls mit Zusatz eines sauren Härtungskatalysators;
2. Zweikomponenten-Polyurethanlacke auf Basis von hydroxylgruppenhaltigen Acrylat-, Polyester- oder Polyetherharzen und aliphatischen oder aromatischen Polyisocyanaten;
3. Einkomponenten-Polyurethanlacke auf Basis von blockierten Polyisocyanaten, die während des Einbrennens deblockiert werden;
4. Zweikomponentenlacke auf Basis von (Poly)ketiminen und aliphatischen oder aromatischen Polyisocyanaten;
5. Zweikomponentenlacke auf Basis von (Poly)ketiminen und einem ungesättigten Acrylatharz oder einem Polyacetoacetatharz oder einem Methylacrylamidoglykolatmethylester;
6. Zweikomponentenlacke auf Basis von carboxyl- oder aminogruppenhaltigen Polyacrylaten und Polyepoxiden;
7. Zweikomponentenlacke auf Basis von anhydridgruppenhaltigen Acrylatharzen und einer Polyhydroxy- oder Polyaminokomponente;
8. Zweikomponentenlacke auf Basis von (Poly)oxazolidinen und anhydridgruppenhaltigen Acrylatharzen oder ungesättigten Acrylatharzen oder aliphatischen oder aromatischen Polyisocyanaten.
9. Zweikomponentenlacke auf Basis von ungesättigten Polyacrylaten und Polymalonaten.
10. Thermoplastische Polyacrylatlacke auf Basis von thermoplastischen Acrylatharzen oder fremdvernetzenden Acrylatharzen in Kombination mit veretherten Melaminharzen.
11. Lacksysteme auf Basis von siloxanmodifizierten Acrylatharzen.
12. Lacksysteme auf Basis von fluormodifizierten Acrylatharzen.

Die Lacke können auch strahlenhärtbare Lacke sein. In diesem Fall besteht das Bindemittel aus monomeren oder oligomeren Verbindungen, die ethylenische Doppelbindungen enthalten und durch Bestrahlung mit aktinischem Licht oder mit Elektronenstrahlen in eine vernetzte hochmolekulare Form übergehen. Meist handelt es sich hierbei um ein Gemisch solcher Verbindungen.

Die Lacke können als Einschicht- oder Zweischichtlacke appliziert werden, wobei die erfindungsgemässen Stabilisatoren vorzugsweise der unpigmentierten obersten Schicht zugesetzt werden.

Die Lacke können auf die Substrate (Metall, Plastik, Holz etc.). nach den üblichen Verfahren aufgebracht werden, beispielsweise durch Streichen, Besprühen, Gießen, Tauchen oder Elektrophorese. Besonders bevorzugt stellen die erfindungsgemässen Zusammensetzungen Lacke für Kraftfahrzeuge dar. Geeignete Lacksysteme und Bindemittel sind z.B. in den US-A-4 314 933, 4 344 876, 4 426 471, 4 426 472 und 4 429 077 beschrieben.

Die vorliegende Erfindung betrifft auch Lackfilme, die durch Aufbringen auf eine Oberfläche und Härtung erhältlich sind.

Ein weiterer Gegenstand der Erfindung sind die mit der Verbindung HALS A bzw. mit einer Mischung bestehend aus HALS A und UV-Absorbern lichtschutzstabilisierten Lacke.

Die folgenden Beispiele erläutern die Erfindung, wobei alle Teile und Prozente Gewichtsteile und Gewichstprozente sind, sofern nicht das Gegenteil angegeben ist.

Die erfindungsgemässen Lichschutzmittel werden tel quel in die Harzkomponente in den in den nachfolgenden Tabellen angegebenen Mengen (% reine Lichtschutzmittel d.h. Aktivsubstanz, jeweils bezogen auf die Festkörperbestandteile des Lackes, d.h. Harz und Härter) eingearbeitet. Zu diesem Gemisch wird der Härter B eingearbeitet.

Die Beispiele 1 - 4 werden an einem 2-Komponenten-High-Solid-Polyurethanlack (2K HS-PUR-Lack) ausgeführt. Sowohl die Harzkomponente, FQ 95-0104, als auch die Härterkomponente, SC 29-0160, sind von der Fa. BASF erhältlich.

Der Klarlack wird mit Xylol auf Spritzviskosität eingestellt und auf ein vorbereitetes Substrat (coil coat beschichtetes Aluminiumblech, silbermetallic Basislack [wässerig, moondust silver XSC 2431 WCA, Bollig u. Kemper]) gespritzt, ca. 1 h bei Raumtemperatur abgelüftet und anschließend bei 140°C 30 Minuten eingebrannt (pmt: peak metal temperature). Es resultiert eine Trockenschichtdicke von 40-50 µm Klarlack.

Die Proben werden in einem Xenon-Weatherometer (Ci 35, Fa. Atlas; CAM 180) einer beschleunigten Bewitterung unterworfen; es wird der 20° Glanz (DIN 67530) gemessen und daraus der Restglanz in % bezüglich des Ausgangswertes berechnet.

Die Beispiele 5 und 6 werden in einem 2-Komponenten-Medium-Solid-Polyurethanlack (2K MS-PUR-Lack) ausgeführt. Sowohl die Harzkomponente, 5 K.53.058 als auch die Härterkomponente, 8 K.71.037, sind von der Fa. Akzo Nobel Coatings erhältlich.

Der Klarlack wird mit Xylol auf Spritzviskosität eingestellt und auf ein vorbereitetes Substrat (silbermetallic Base Coat [light gray MS 612 VR modifiziertes Polyester/Melamin, lösungsmittelhaltig, Akzo Nobel]) gespritzt, ca. 1 Stunde bei Raumtemperatur abgelüftet und anschließend bei 80°C, 30 Minuten eingebrannt (pmt: peak metal temperature). Es resultiert eine Trockenschichtdicke von 40-45 µm Klarlack.

In Beispiel 5 werden die Proben in einem UVCON-Gerät (ASTM G53-93: 8 Stunden Licht 70°C, 4 Stunden Dunkelphase / Kondensation 50°C) einer beschleunigten Bewitterung unterworfen; es wird der 20° Glanz (DIN 67530) gemessen und daraus der Restglanz in % bezüglich des Ausgangswertes berechnet. Die Vergilbung wird zusätzlich kolorimetrisch bestimmt (b*-Wert entsprechend der CIELAB-Norm gemessen und der Delta-b*-Wert bezüglich des Ausgangswertes berechnet).

In Beispiel 6 werden die Proben in einem Xenon-Weatherometer (WOM Ci 65; CAM 7/DIN 53 231A) einer beschleunigten Bewitterung unterworfen; es wird der 20° Glanz (DIN 67530) gemessen und daraus der Restglanz in % bezüglich des Ausgangswertes berechnet.

In den Vergleichsbeispielen werden folgende, nicht photoreaktive, das UV-Licht nicht absorbierende HALS-Verbindungen gemäß dem Stand der Technik eingesetzt:
- HALS 1:: Tinuvin (RTM) 292, ein Handelsprodukt der Firma Ciba-Geigy, Schweiz
- HALS 4:: Sanduvor (RTM) 3055, ein Handelsprodukt der Firma Clariant, Schweiz

### BEISPIEL 1

HALS-Kombinationen mit UV-Absorbern der Oxanilid-Klasse:

| **Nr.** | **HALS** | **UV-Absorber** | **20° Glanz nach 4000 Stunden** | **Restglanz nach 4000 h in %** |
|---|---|---|---|---|
| 1 | ohne | ohne | 15 (3000 h, z*) | 17 (3000 h, z*) |
| 2 | 0.6% HALS 1 | 0.6% UVA 9 | 20 | 24 |
| 3 | 0.6% HALS 4 | 0.6% UVA 9 | 19 | 22 |
| 4 | 0.6% HALS A | 0.6% UVA 9 | 33 | 39 |
| 5 | 0.6% HALS 1 | 0.6% UVA 10 | 24 | 28 |
| 6 | 0.6% HALS 4 | 0.6% UVA 10 | 21 | 25 |
| 7 | 0.6% HALS A | 0.6% UVA 10 | 27 | 32 |

| | | | | |
|---|---|---|---|---|
| *) z = zerstört | | | | |

Die Laufnummern 4 und 7 sind erfindungsgemässe Beispiele.

### BEISPIEL 2

HALS-Kombinationen mit UV-Absorbern der Benzotriazol-Klasse:

| **Nr.** | **HALS** | **UV-Absorber** | **20° Glanz nach 4000 Stunden** | **Restglanz nach 4000 h in %** |
|---|---|---|---|---|
| 1 | ohne | ohne | 15 (3000 h, z*) | 17 (3000 h, z*) |
| 2 | 0.6% HALS 1 | 0.6% UVA 2 | 41 | 48 |
| 3 | 0.6% HALS 4 | 0.6% UVA 2 | 29 | 34 |
| 4 | 0.6% HALS A | 0.6% UVA 2 | 59 | 69 |
| 5 | 0.6% HALS 1 | 0.6% UVA 3 | 32 | 38 |
| 6 | 0.6% HALS 4 | 0.6% UVA 3 | 21 | 25 |
| 7 | 0.6% HALS A | 0.6% UVA 3 | 39 | 46 |
| 8 | 0.6% HALS 1 | 0.6% UVA 5 | 49 | 58 |
| 9 | 0.6% HALS 4 | 0.6% UVA 5 | 29 | 34 |
| 10 | 0.6% HALS A | 0.6% UVA 5 | 65 | 76 |

| | | | | |
|---|---|---|---|---|
| *) z = zerstört | | | | |

Die Laufnummern 4, 7 und 10 sind erfindungsgemässe Beispiele.

### BEISPIEL 3

HALS-Kombinationen mit UV-Absorbern der o-Hydroxyphenyltriazin-Klasse:

| **Nr.** | **HALS** | **UV-Absorber** | **20° Glanz nach 4000 Stunden** | **Restglanz nach 4000 h in %** |
|---|---|---|---|---|
| 1 | ohne | ohne | 15 (3000 h, z*) | 17 (3000 h, z*) |
| 2 | 0.6% Hals 1 | 0.6% UVA 6 | 59 | 69 |
| 3 | 0.6% Hals 4 | 0.6% UVA 6 | 59 | 69 |
| 4 | 0.6% Hals A | 0.6% UVA 6 | 63 | 74 |
| 5 | 0.6% Hals 1 | 0.6% UVA 7 | 68 | 80 |
| 6 | 0.6% Hals 4 | 0.6% UVA 7 | 65 | 76 |
| 7 | 0.6% Hals A | 0.6% UVA 7 | 68 | 80 |

| | | | | |
|---|---|---|---|---|
| *) z = zerstört | | | | |

Die Laufnummern 4 und 7 sind erfindungsgemässe Beispiele.

In den Beispielen 1 bis 3 weisen die mit HALS A stabilisierten Proben eine höhere Beständigkeit gegen Bewitterung auf als Proben, die einen nicht UV-Licht absorbierenden und nicht photoreaktiven HALS in gleicher Menge enthalten.

### BEISPIEL 4

| **Nr.** | **HALS** | **UV-Absorber** | **20° Glanz nach 4500 Stunden** | **Restglanz nach 4500 h in %** |
|---|---|---|---|---|
| 1 | ohne | ohne | | |
| 2 | 0.8% HALS 1 | 1.2% UVA 1 | | 20 |
| 3 | 0.8% HALS 1 | 1.2% UVA 6 | | 65 |
| 4 | 0.8% HALS A | 1.2% UVA 1 | | 75 |
| 5 | 0.8% HALS A | 1.2% UVA 6 | | 78 |
| 6 | 2.0% HALS A | ohne | | 81 |

Hier zeigt sich überraschend, daß der UV-Licht absorbierende HALS A alleine eine ebenso gute oder noch bessere Wirksamkeit besitzt wie die Kombinationen aus UV-Absorbern und sterisch gehinderten Aminen des Stands der Technik, die weder photoreaktiv sind noch UV-Licht absorbieren, wenn er in einer den Kombinationen entsprechenden Konzentration eingesetzt wird.

### BEISPIEL 5

| **Nr.** | **HALS** | **UV-Absorber** | **20° Glanz nach 1750 Stunden** | **Restglanz nach 1750 h in %** | **Delta-b*** |
|---|---|---|---|---|---|
| 1 | Ohne | Ohne | Zerstört | | |
| 2 | 0.3% HALS 1 | 0.3% UVA 8 | 71 | 79 | 4.2 |
| 3 | 0.3% HALS 4 | 0.3% UVA 8 | 78 | 87 | 4.9 |
| 4 | 0.3% HALS A | 0.3% UVA 8 | 83 | 92 | 3.7 |
| 5 | 0.3% HALS 1 | 0.3% UVA 11 | 46 | 51 | 6.2 |
| 6 | 0.3% HALS 4 | 0.3% UVA 11 | 57 | 63 | 5.9 |
| 7 | 0.3% HALS A | 0.3% UVA 11 | 62 | 69 | 5.1 |

### BEISPIEL 6

| **Nr.** | **HALS** | **UV-Absorber** | **20° Glanz nach 2000 Stunden** | **Restglanz nach 2000 h in %** |
|---|---|---|---|---|
| 1 | Ohne | Ohne | 33 | 36 |
| 2 | 0.3% HALS 1 | 0.3% UVA 9 | 52 | 58 |
| 3 | 0.3% HALS 4 | 0.3% UVA 9 | 65 | 72 |
| 4 | 0.3% HALS A | 0.3% UVA 9 | 68 | 76 |
| 5 | 0.3% HALS 1 | 0.3% UVA 8 | 71 | 79 |
| 6 | 0.3% HALS 4 | 0.3% UVA 8 | 74 | 82 |
| 7 | 0.3% HALS A | 0.3% UVA 8 | 77 | 85 |
| 8 | 0.3% HALS 1 | 0.3% UVA 11 | 51 | 57 |
| 9 | 0.3% HALS 4 | 0.3% UVA 11 | 55 | 61 |
| 10 | 0.3% HALS A | 0.3% UVA 11 | 61 | 68 |

Auch in diesen Beispielen zeigt sich die überragende Wirksamkeit der Kombinationen von UV-Absorbern mit dem erfindungsgemässen HALS A. Zusätzlich kann eine deutlich sichtbare Verbesserung der Vergilbungstendenz - ausgedrückt in den Delta-b*-Werten - dieser Kombinationen festgestellt werden (Beispiel 5).

## Patentansprüche

1. Verwendung einer Mischung bestehend aus einer Piperidinverbindung der Formel (A) (nachfolgend HALS A genannt) 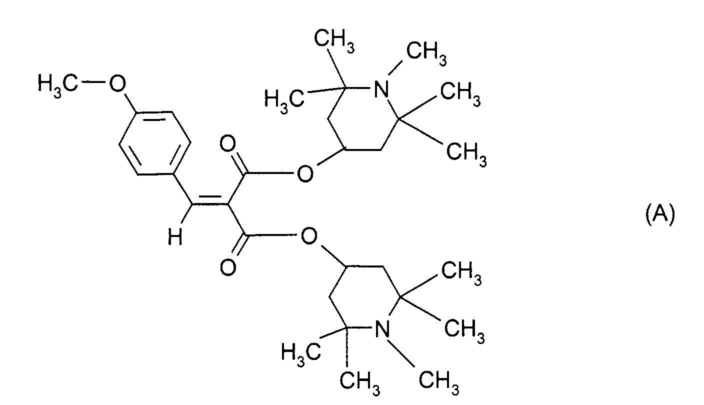 und mindestens einem UV-Absorber ausgewählt aus der Gruppe, die aus 2-Hydroxyphenylbenztriazolen, 2-Hydroxyphenyl-triazinen, 2-Hydroxybenzophenonen, Oxalaniliden und Zimtsäurederivaten besteht, als Stabilisierungsmittel gegen die Einwirkungen von Wärme und/oder UV-Licht auf Lacke, wobei das Verhältnis HALS A zu UV-Absorber 10:1 bis 1:10 beträgt.

2. Verwendung nach Anspruch 1, **dadurch gekennzeichnet, dass** das Verhältnis HALS A zu UV-Absorber 4:1 bis 1:4, bevorzugt 3:1 bis 1:3 beträgt.

3. Verfahren zum Stabilisieren von Lacken gegen den Abbau des im Lack enthaltenen Polymermaterials hervorgerufen durch Luftsauerstoff, Feuchtigkeit, Wärme und/oder UV-Licht, **dadurch gekennzeichnet, dass** man dem zu stabilisierenden Lack eine Mischung bestehend aus einer Verbindung der Formel (A) und mindestens einem UV-Absorber nach Anspruch 1 in einer Konzentration von 0.2 bis 5 Gew.-%, vorzugsweise 0.5 bis 1.5 Gew.-%, bezogen auf den Trockengehalt des Lacks, zusetzt.

4. Stabilisierte Lacke, insbesondere Autolacke, die 0.2 bis 5 Gew.-%, vorzugsweise 0.5 bis 1.5 Gew.-%, bezogen auf den Trockengehalt des Lacks, einer Mischung bestehend aus einer Verbindung der Formel (A) und mindestens einem UV-Absorber nach Anspruch 1 enthalten.

## Claims

1. The use of a mixture consisting of a piperidine compound of the formula (A) (hereinafter referred to as HALS A) 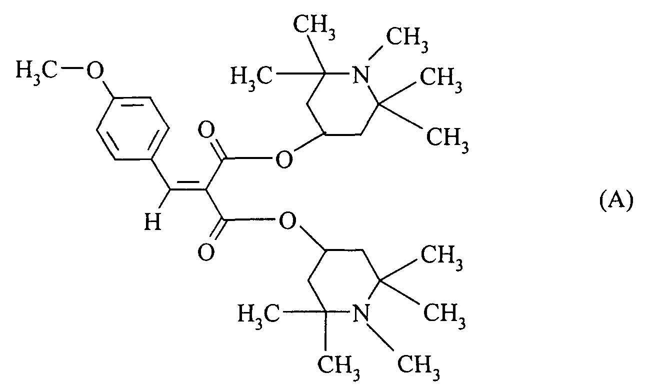 and at least one UV absorber selected from the group that consists of 2-hydroxyphenylbenztriazoles, 2-hydroxyphenyltriazines, 2-hydroxybenzophenones, oxalanilides and cinnamic acid derivatives, as stabilizing agent against the effects of heat and/or UV light on lacquers, **characterized in that** the ratio of HALS A to UV absorber is 10:1 to 1:10

2. Use according to claim 1, **characterized in that** the ratio of HALS A to UV absorber is 4:1 to 1:4, preferentially 3:1 to 1:3.

3. Process for the stabilization of lacquers against the degradation of the polymer material contained in the lacquer caused by atmospheric oxygen, humidity, heat and/or UV light, **characterized in that** a mixture consisting of a compound of formula (A) and at least one UV absorber according to claim 1 in a concentration of 0.2 to 5% by weight, preferentially 0.5 to 1.5% by weight, related to the dry content of the lacquer, is added to the lacquer to be stabilized.

4. Stabilized lacquers, in particular automobile lacquers, that contain 0.2 to 5% by weight, preferentially 0.5 to 1.5% by weight, related to the dry content of the lacquer, of a mixture consisting of a compound of formula (A) and at least one UV absorber according to claim 1.

## Revendications

1. Utilisation d'un mélange constitué par un composé pipéridinique formule (A) (désigné ci-après HALS A) 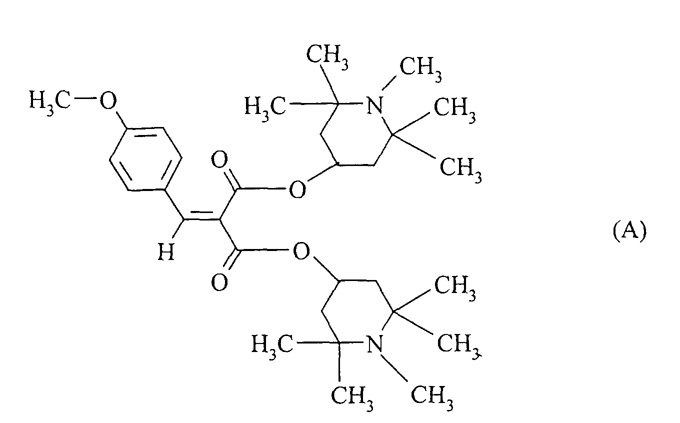 et par au moins un absorbeur UV choisi dans le groupe constitué par les 2-hydroxy-phénylbenzotriazoles, les 2-hydroxyphényl-triazines, les 2-hydroxybenzophénones, les oxalanilides et les dérivés de l'acide cinnamique, comme agent stabilisant contre les effets de la chaleur et/ou de la lumière UV sur les vernis, le rapport du HALS A à l'absorbeur UV étant de 10:1 à 1:10.

2. Utilisation selon la revendication 1, **caractérisée en ce que** le rapport du HALS A à l'absorbeur UV est de 4:1 à 1:4, de préférence de 3:1 à 1:3.

3. Procédé pour la stabilisation des vernis contre la dégradation de la matière polymère contenue dans les vernis, provoquée par l'oxygène de l'air, l'humidité, la chaleur et/ou la lumière UV, **caractérisé en ce que** l'on ajoute au vernis à stabiliser un mélange constitué par un composé de formule (A) et par au moins un absorbeur UV selon la revendication 1, à une concentration de 0,2 à 5% en poids, de préférence de 0,5 à 1,5% en poids, par rapport à la teneur en matière sèche du vernis.

4. Les vernis stabilisés, en particulier les vernis pour automobiles, qui contiennent de 0,2 à 5% en poids, de préférence de 0,5 à 1,5% en poids, par rapport à la teneur en matière sèche du vernis, d'un mélange constitué par un composé de formule (A) et par au moins un absorbeur UV selon la revendication 1.
